# FASCICULE DE BREVET EUROPEEN

(11) **EP 1 929 611 B1**
(45) Date de publication et mention de la délivrance du brevet: **30.05.2012**
(21) Numéro de dépôt: 06831195.0
(22) Date de dépôt: 19.09.2006
(51) Int. Cl.: H02K 9/04

(54) **SYSTEME DE VENTILATION POUR MACHINES ELECTRIQUES TOURNANTES EQUIPE D'UN DISPOSITIF DE REFROIDISSEMENT PAR ECOULEMENT FORCE D'UN FLUIDE ET MACHINE ELECTRIQUE TOURNANTE COMPORTANT UN TEL DISPOSITIF**
LÜFTUNGSSYSTEM FÜR ELEKTRISCHE DREHMASCHINEN MIT EINER KÜHLVORRICHTUNG MIT ERZWUNGENEM FLÜSSIGKEITSFLUSS UND ELEKTRISCHE DREHMASCHINE DAMIT
VENTILATING SYSTEM FOR ELECTRICAL ROTATING ELECTRICAL MACHINES EQUIPPED WITH A FORCED-FLUID FLOW COOLING DEVICE AND ROTATING ELECTRICAL MACHINE COMPRISING SAME

(30) Priorité: 29.09.2005 FR 0509936
(43) Date de publication de la demande: 11.06.2008
(73) Titulaire: VALEO EQUIPEMENTS ELECTRIQUES MOTEUR, 94046 Créteil (FR)
(72) Inventeur: VASILESCU, Claudiu, F-75020 Paris (FR); FAKES, Michel, F-59113 Seclin (FR)
(74) Mandataire: Tran, Chi-Hai
(86) Numéro de dépôt international: PCT/FR2006/050906
(87) Numéro de publication internationale: WO 2007/036659

(56) Documents cités:
- EP-A- 0 671 801
- EP-A1- 0 062 680
- FR-A- 2 515 893
- JP-A- 57 095 150
- US-A1- 2005 104 460
- PATENT ABSTRACTS OF JAPAN vol. 017, no. 668 (E-1473), 9 décembre 1993 (1993-12-09) & JP 05 219685 A (HITACHI LTD; others: 01), 27 août 1993 (1993-08-27)
- PATENT ABSTRACTS OF JAPAN vol. 015, no. 494 (E-1145), 13 décembre 1991 (1991-12-13) & JP 03 215146 A (NIPPONDENSO CO LTD), 20 septembre 1991 (1991-09-20)
- PATENT ABSTRACTS OF JAPAN vol. 005, no. 117 (E-067), 28 juillet 1981 (1981-07-28) & JP 56 056147 A (NIPPON DENSO CO LTD), 18 mai 1981 (1981-05-18)
- PATENT ABSTRACTS OF JAPAN vol. 1998, no. 04, 31 mars 1998 (1998-03-31) -& JP 09 322466 A (HITACHI LTD), 12 décembre 1997 (1997-12-12)

## Description

### Domaine de l'Invention

L'invention concerne un système de ventilation pour machines électriques tournantes, notamment pour véhicule automobile, du type comprenant un rotor monté rotatif dans un carter portant un stator entourant le rotor et un dispositif de refroidissement par écoulement force d'un fluide, tel que de l'air, muni d'au moins un ventilateur solidaire du rotor.

L'invention concerne également une machine électrique tournante comprenant un tel système de ventilation.

### Etat de la technique

Des systèmes de ventilation de ce type sont utilisés couramment dans le domaine des machines électriques tournantes, notamment dans les alternateurs pour véhicule automobile comportant un carter en au moins deux parties appelées palier avant et palier arrière. Ces paliers sont dotées d'ouvertures d'entrée et de sortie pour circulation d'un fluide de refroidissement à l'intérieur de la machine sous l'action d'au moins un ventilateur.

Plus précisément ce ventilateur solidaire du rotor crée un écoulement du fluide de refroidissement, tel que de l'air, dont le débit augmente linéairement avec la vitesse de rotation. Cette évolution linéaire du débit d'air avec la vitesse de rotation entraîne des très grands débits à des vitesses de rotation élevées, par minute, assurant un refroidissement efficace, notamment du stator, à ces vitesses.

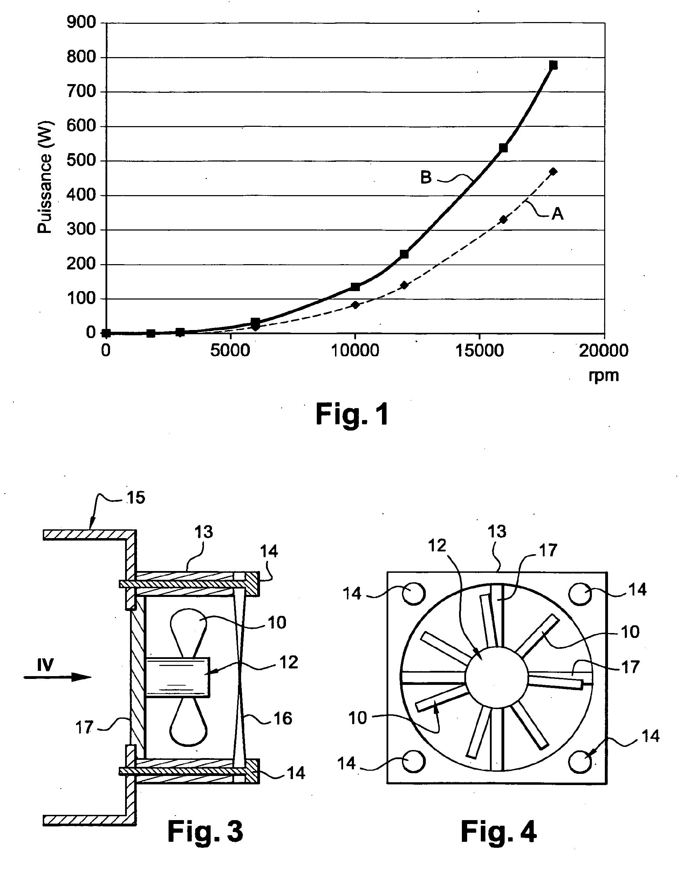

Mais, des débits si importants ont pour contrepartie que la puissance P consommée est très grande, par exemple de l'ordre de 775 Watts pour un débit de l'ordre de 80 litres/seconde à 18000 tours par minute, pour un ventilateur arrière donné. Ainsi pour une machine électrique tournante équipée d'un ventilateur avant et d'un ventilateur arrière, dans le présent cas d'exemple, il se produit donc au total des pertes mécaniques de l'ordre de 1,5 kW. Un autre inconvénient majeur des systèmes de ventilation classiques décrits plus haut est que le niveau de bruit aéraulique, qui apparaît vers 7000 rotations tours par minute (rpm), devient très important, par exemple de 115 dB à une vitesse de rotation de 18000 (rpm). La figure 1 permet d'apprécier, pour une machine électrique tournante donnée classique l'évolution de la puissance utile indiquée par la courbe A et la puissance consommée, indiquée par la courbe B, en fonction de la vitesse de rotation. Cette figure fait clairement apparaître le rapport insatisfaisant de la puissance utile en comparaison à la puissance consommée, inhérent aux systèmes de ventilation classique utilisant un ventilateur solidaire de rotation du rotor.

Dans le document JP 5-219 685, conforme au préambule de la revendication 1, il est prévu un ventilateur indépendant piloté en fonction de la température.

### Objet de l'invention

L'invention a pour but de proposer un système de ventilation qui pallie les inconvénients des pertes mécaniques élevées et des bruits aérauliques importants, inhérents aux systèmes connus.

Le but est atteint par la partie caractérisante de la revendication 1.

Une machine électrique tournante du type précité est caractérisée en ce qu'elle comporte un tel système de refroidissement.

Grâce à l'invention on limite les pertes mécaniques à des vitesses de rotation du rotor élevées.

En outre pour des vitesses de rotation relativement faible du rotor on obtient un refroidissement approprié de la machine électrique tournante.

De plus on réduit les niveaux de bruits aérauliques.

On appréciera que la vitesse de rotation de ce ventilateur indépendant peut varier par rapport à celle du rotor.

Dans un mode de réalisation le ventilateur indépendant et le ventilateur solidaire du rotor sont disposés de part et d'autre du rotor.

Dans un autre mode de réalisation le ventilateur solidaire du rotor et le ventilateur indépendant sont disposés d'un même côté du rotor.

Selon une réalisation, le ventilateur entraîné par le rotor présente une taille réduite par rapport à un ventilateur solidaire du rotor devant produire un débit sensiblement égal au débit cumulé du ventilateur indépendant et du ventilateur de rotor de taille réduite.

Selon encore une réalisation avantageuse de l'invention, le système de ventilation est caractérisé en ce que la réduction de la taille du ventilateur solidaire du rotor constitue un moyen de réduction des pertes mécaniques et du niveau de bruit produit par le système de ventilation.

Selon encore une réalisation avantageuse de l'invention, le système de ventilation est caractérisé en ce que le ventilateur indépendant est susceptible de fonctionner à une vitesse de rotation constante.

Selon encore une réalisation avantageuse de l'invention, le système de ventilation est caractérisé en ce que le ventilateur indépendant est un ventilateur dont la vitesse de rotation est variable par marche, c'est-à-dire par palier.

Selon encore une réalisation avantageuse de l'invention, le système de ventilation est caractérisé en ce que le ventilateur indépendant est entraîné en rotation par un moteur indépendant tel qu'un moteur électrique.

Selon encore une réalisation avantageuse de l'invention, le système de ventilation est caractérisé en ce que la vitesse de rotation du ventilateur indépendant est pilotée en fonction du fonctionnement de la machine électrique tournante, avantageusement par le régulateur de cette machine.

Selon encore une réalisation avantageuse de l'invention, le système de ventilation est caractérisé en ce que le ventilateur indépendant est monté dans un support susceptible d'être fixé sur le capot de la machine électrique tournante, en face des ouvertures de passage d'air, tel que des ouvertures d'admission d'air, de celui-ci.

Selon encore une réalisation avantageuse de l'invention, le système de ventilation est caractérisé en ce que le ventilateur indépendant est un ventilateur à ventilation axiale.

Le cas échéant, la vitesse de rotation du ventilateur indépendant est contrôlée en fonction de la vitesse de rotation du rotor, sans prendre en compte une valeur de température.

Dans un exemple de mise en oeuvre de l'invention, le rotor porte deux ventilateurs disposés respectivement sur deux côtés opposés du rotor, celui de ces ventilateurs situé du côté du ventilateur indépendant présente un diamètre externe strictement inférieur au diamètre externe de l'autre ventilateur porté par le rotor.

### Description sommaire des dessins

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 illustre sous forme de courbes A et B respectivement la puissance utile et la puissance consommée d'une machine électrique tournante équipée d'un ventilateur arrière solidaire en rotation du rotor, en fonction de la vitesse de rotation du rotor en rotation ou tours par minute (rpm) ;
- la figure 2 est une vue schématique, en coupe axiale, d'une machine électrique tournante équipée d'un système de ventilation selon l'invention;
- la figure 3 est une vue schématique latérale d'un mode de réalisation et montage du ventilateur indépendant ;
- la figure 4 est une vue du ventilateur indépendant selon la flèche IV de la figure 3;
- les figures 5 et 6 illustrent sous forme de courbes C, D et E, en fonction de la vitesse de rotation du rotor en rpm, la température moyenne T_{CH} et T_{R} mesurée au niveau respectivement des chignons arrière et des roulements du palier arrière pour un système de ventilation comprenant respectivement seulement un ventilateur classique entraîné par le rotor, seulement un ventilateur indépendant et une combinaison d'un ventilateur entraîné par le rotor, de plus faible taille et du ventilateur indépendant susmentionné, conformément à l'invention ;
- les figures 7 et 8 indiquent, également sous forme de trois courbes, l'évolution de la température T_{JD+}, T_{JD-} de la jonction des diodes positives et des diodes négatives, en fonction de la vitesse de rotation (rpm) du rotor pour les trois cas déjà indiqués ;
- les figures 9 et 10 illustrent également sous forme de trois courbes la conductance Cₒ₊, Cₒ₋ moyenne des diodes positives et des diodes négatives du dispositif de redressement, en fonction de la vitesse de rotation indiquée en rotation par minute (rpm) pour les trois cas considérés ;
- la figure 11 représente sous forme des trois courbes, le bruit en décibels de la machine, en fonction de la vitesse de rotation du rotor (rpm) pour les trois cas susmentionnés ;
- la figure 12 est une vue partielle en perspective du palier arrière de la figure 2 ;
- la figure 13 est une vue partielle en perspective d'un rotor à griffes équipé d'au moins un aimant entre ces dents ;
- la figure 14 est une vue en perspective d'une variante de réalisation du ventilateur arrière de la figure 2.

### Description de l'invention

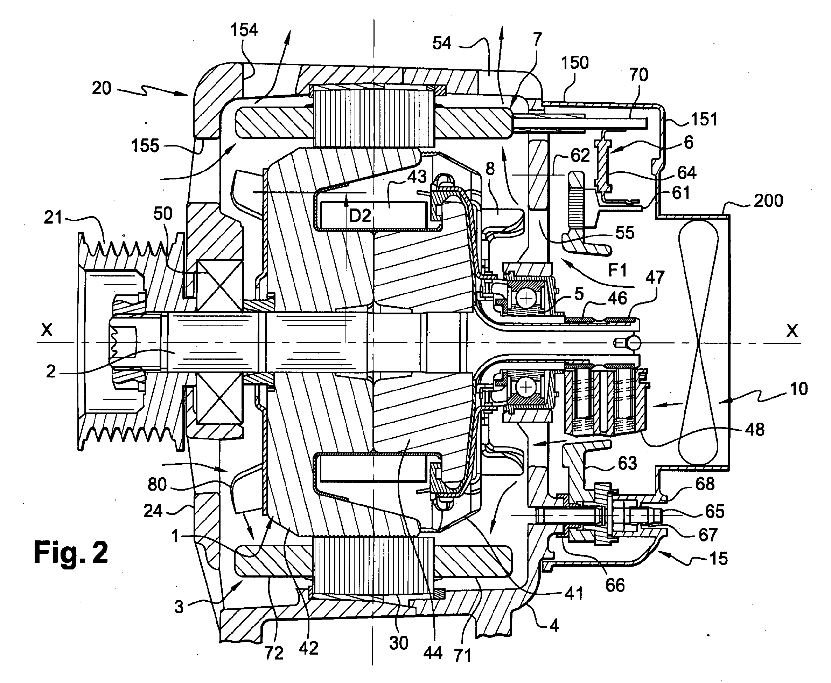

La figure 2 illustre schématiquement la structure d'une machine électrique tournante équipée d'un système de ventilation selon l'invention.

Dans cette figure 2 cette machine consiste en un alternateur polyphasé pour véhicule automobile à ventilation interne comportant un carter 20 en au moins deux parties 4, 24 portant intérieurement un stator 3 entourant un rotor inducteur 1 solidaire d'un arbre de rotor 2. Le stator 3 comporte un corps 30 portant un bobinage 7. Le bobinage 7 traverse le corps 30 et s'étend en saillie axiale de part et d'autre de ce corps 30.

Le corps 30 et le rotor 1 sont de forme annulaire.

Les deux parties 4, 24, appelées respectivement palier arrière 4 et palier avant 24, sont à la figure 2 métalliques plus précisément à base d'aluminium.

Ces paliers 4, 24 ont une forme creuse et présentent chacun un fond globalement d'orientation transversale prolongé à sa périphérie externe par un rebord globalement d'orientation axiale.

Ils présentent des pattes, représentées partiellement dans cette figure 2, pour fixation de l'alternateur sur une partie fixe du véhicule.

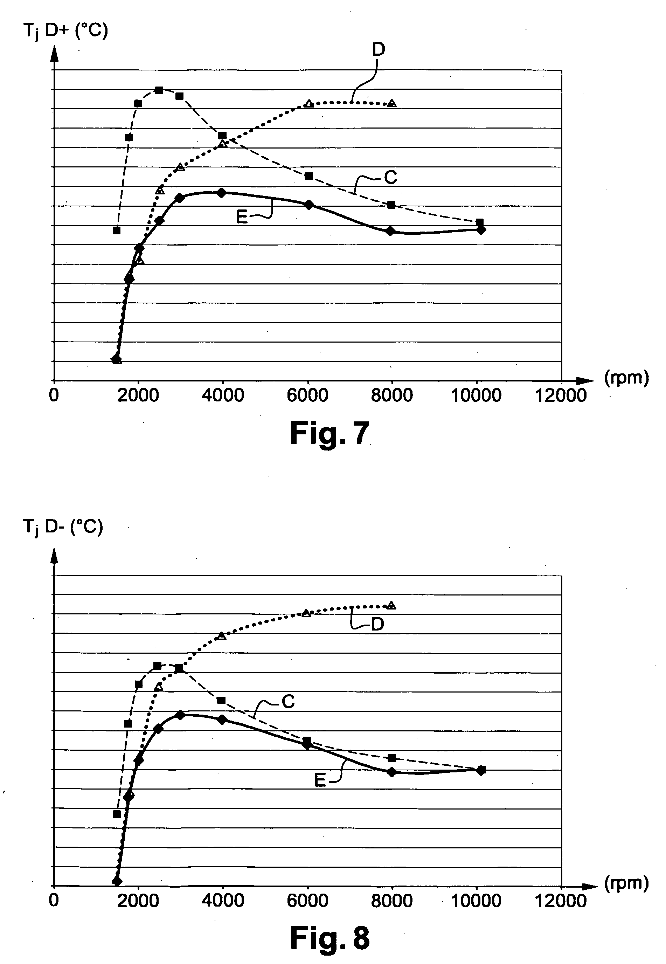

De manière connue ces deux paliers sont reliés ensembles par des vis ou des tirants visibles par exemple à la figure 7 du document WO 02/29958. A la figure 2 on a adopté le montage élastique du corps 30 dans le carter 4, 24 décrit dans ce document en sorte qu'il est prévu de la résine thermoconductrice déformable élastiquement (non référencée) ainsi qu'un joint annulaire plat et une série de tampons (non référencés) pour assurer un découplage mécanique radial entre le corps 30 et le carter 4, 24, le joint intervenant entre l'extrémité axiale avant du corps 30 et un épaulement périphérique externe du palier avant, tandis que les tampons interviennent entre l'extrémité axiale arrière du corps 30 et des logements épaulés ménagés à la périphérie externe du palier arrière 4..

En variante le corps 30 est fixé rigidement dans le carter 4, 24

L'axe X-X de l'arbre 2 constitue l'axe de l'alternateur. Cet arbre 2 traverse centralement le rotor 1 et est ici localement moleté pour emmanchement à force du rotor 1 sur l'arbre 2.

L'arbre de rotor 2 traverse les paliers 24,4 et porte, à son extrémité axiale avant, un organe de transmission de mouvement adjacent au fond du palier avant 24. Cet organe est ici une poulie 21 ou en variante un engrenage, appartenant à un dispositif de transmission de mouvement intervenant entre le moteur thermique, dit aussi moteur à combustion, et l'alternateur.

Les paliers 4, 24 portent chacun centralement un roulement à billes respectivement 5,50 pour le montage à rotation de l'arbre de rotor 2.

Ici on a représenté de manière schématique le roulement à billes 50 de plus grand diamètre que le roulement arrière 5.

Le rotor 1, de forme annulaire, comporte au moins un bobinage inducteur 43 relié à un régulateur de tension comportant un circuit de commande du courant électrique circulant dans le bobinage 43. Ce régulateur, du type monofonction ou multifonction, assume la régulation de la tension de la batterie du véhicule automobile quelque soit la vitesse de rotation, la température et le courant débité. Le régulateur multifonction comprend par exemple un microprocesseur qui effectue les calculs et les traitements nécessaires à la régulation. Ce type de régulateur est décrit par exemple dans le document EP A 0 802 606. Il peut recevoir des informations du dispositif du contrôle moteur du véhicule.

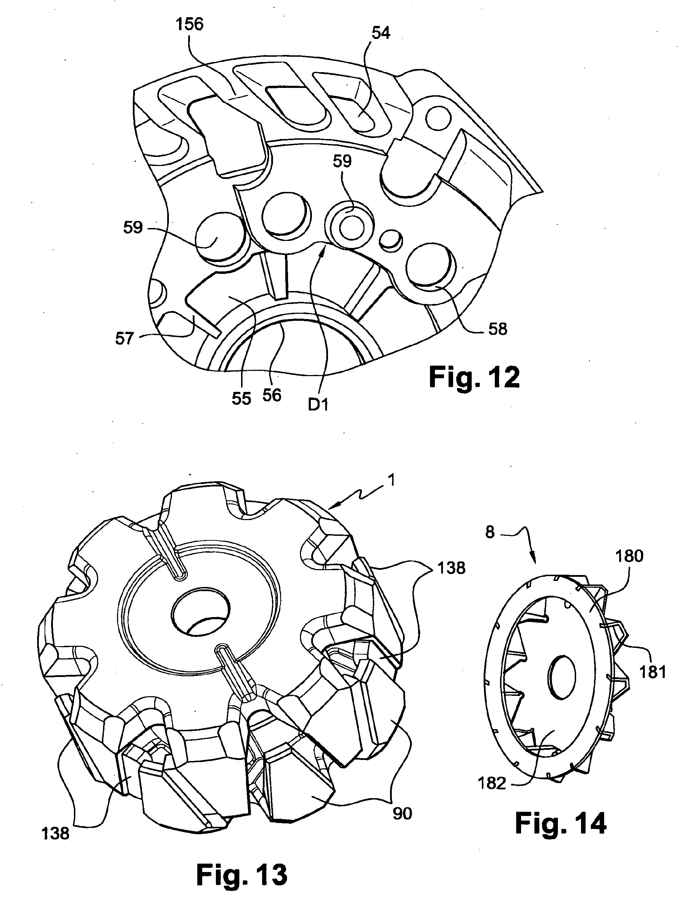

Le rotor 1 de la figure 2 est un rotor à griffes qui comporte deux roues polaires 41, 42, de forme annulaire, et un noyau 44, également de forme annulaire, intercalé entre les deux roues 41, 42. Ce noyau 44 porte un bobinage d'excitation 43 ici de forme annulaire. Chaque roue 41, 42 comporte un flasque d'orientation globalement transversale portant à sa périphérie externe des dents globalement d'orientation axiale. Les dents, de forme globalement trapézoïdale comme visible à la figure 13, d'une roue polaire 41, 42 sont dirigées vers le flasque de l'autre roue polaire. Deux dents consécutives d'une roue polaire encadrent une dent de l'autre roue polaire en sorte que ces dents sont circonférentiellement imbriquées. Les roues 41, 42 et le noyau 44 sont ici en matériau ferromagnétique. Lorsque le bobinage d'excitation 43 est alimenté électriquement il se produit donc une aimantation des roues polaires avec création de pôles magnétique à raison de un pôle par dent. Chaque roue polaire comporte par exemple six à huit dents.

En variante le rotor est un rotor à pôles saillants, avec présence d'un enroulement autour de chaque pôle.

Dans tous les cas un entrefer existe entre la périphérie externe du rotor 1 de forme annulaire et la périphérie interne du corps 30 du stator 3.

Ce rotor 1 présente ici à sa périphérie externe des rainures ménagées dans ses dents pour diminuer les pertes par courant de Foucault.

Le bobinage 7 du stator 3 est composé de plusieurs phases, comportant chacune au moins un enroulement.

Les sorties de ces enroulements, dont l'une est visible en 70 à la figure 2, sont reliées électriquement à un dispositif de redressement 6 pour redresser le courant alternatif produit dans les phases du stator, lorsque le stator est un induit, en un courant continu pour recharger la batterie et/ou alimenter les consommateurs du réseau de bord du véhicule. Ce dispositif de redressement consiste par exemple un pont de diodes 6, en variante en un pont de transistors par exemple du type MOSFET.

A la figure 2 ce pont 6 comporte un dissipateur positif 63, un dissipateur négatif 4 et un connecteur 64.

Les dissipateurs sont métalliques.

Le dissipateur positif 63, relié à la borne positive de la batterie du véhicule via un câble non visible, porte une pluralité de diodes positives dont l'une est visible en 61 à la figure 2. Ce dissipateur est avantageusement muni d'ailettes de refroidissement à sa périphérie interne. Deux de ces ailettes, non référencées, sont visibles à la figure 2.

Le dissipateur négatif, relié à la masse, porte une pluralité des diodes négatives. A la figure 2 le dissipateur négatif est constitué par le fond, globalement d'orientation transversale par rapport à l'axe X-X, du palier arrière 4 et on a représenté dans cette figure en 62 l'axe d'une diode positive non visible dans le plan de coupe. Les queues des diodes sont dirigées ici axialement dans le même sens, tandis que les corps moleté des diodes sont emmanchées à force respectivement dans le palier arrière, ici métallique, et dans le dissipateur positif 63. En variante la fixation est réalisée par soudage ou brasage.

Les diodes positives et négatives sont, de manière connue, groupées par paire pour former les bras du pont de diodes 6. Le nombre de paires de diodes dépend des applications, notamment du nombre de phases de l'alternateur. Par exemple pour un alternateur à six phases le pont 6 comporte six bras et six paires de diodes. Pour un alternateur à trois phases le pont 6 comporte trois paires de diodes et éventuellement une paire de diodes supplémentaire.

Le connecteur 64 comporte une plaque en matière électriquement isolante, ici en matière plastique, comprenant des traces métalliques noyées dans la plaque. Ces traces comporte des portions apparentes pour liaison électrique avec les diodes et avec les sorties 70 du bobinage 7 du stator.

Le pont 6 est fixé au palier arrière 4 à l'aide de goujons 65 visés dans des bossages taraudés du fond du palier arrière 4, un isolant électrique 66 étant associé à chaque goujon 65 pour isoler électriquement le dissipateur 63 du palier 4. Cet isolant 66, par exemple en matière plastique, comporte une cheminée pour le passage de la partie filetée du goujon associé 65 et une embase intercalée axialement entre le bossage taraudé concerné du palier 4 et le dissipateur positif 63. Un écrou (non référencé) est associé à chaque goujon 65 et se visse sur celui-ci pour serrer axialement le pont 6 sur le palier 4 via une rondelle (non référencée) prenant appui sur le connecteur 64.

Les goujons 65 servent également à la fixation d'un capot de protection 15 sur le palier arrière 4. Pour ce faire chaque goujon 65 comporte une deuxième partie filetée venant en prise avec une protubérance annulaire 67 que présente le capot 15. Cette protubérance 67 s'étend localement en saillie à l'intérieur d'une cheminée 68 traversée par le goujon 65 et servant de logement à l'écrou associé à chaque goujon 65.

Le capot 15 de forme creuse est en matière électriquement isolante, ici en matière plastique, et est rapporté dans ce mode de réalisation par encliquetage, à la faveur de ses protubérance 67, sur la deuxième partie filetée de chaque goujon 65 en sorte qu'il est fixé ainsi sur le fond du palier 4.

En variante le capot 15 est fixé par des vis ou des boulons sur le palier arrière 4.

Ce capot est donc solidaire du palier 4.

Le capot de protection 15 coiffe le pont de diodes 6 ainsi que les extrémités 70, l'extrémité arrière de l'arbre 2, traversant le fond du palier 4.

Ce capot 15 présente une jupe 150, ici globalement d'orientation axiale par rapport à l'axe x-x, entourant les extrémités 70 et le pont 6. L'extrémité libre de la jupe est adjacente au fond du palier 4, tandis que l'autre extrémité axiale de la jupe se raccorde au fond 151 du capot globalement d'orientation transversale par rapport à l'axe X-X.

Ce fond 151 est ouvert centralement de manière décrite ci-après.

En variante l'extrémité libre de la jupe présente un rebord radial dirigé vers l'extérieur pour fixation du capot 15 sur le palier 4 à l'aide de vis ou de boulons, les goujons 65 pouvant être alors remplacés par des vis.

Le bobinage inducteur 43 du rotor 1 est à la figure 2 implanté dans le rotor 1 entre les deux roues polaires 41, 42, le noyau 44 étant ici en deux parties venues de matière avec chaque roue polaire. Bien entendu un support isolant (non référencé à la figure 2) intervient entre le bobinage 43 et la périphérie externe du noyau 44. En variante le noyau 44, sur lequel est monté le bobinage 43, est en une seule partie interposé axialement entre les deux flasques des roues 41, 42. Dans ce cas l'arbre de rotor porte à son extrémité axiale arrière, qui traverse le fond du palier 4, des bagues collectrices 46, 47 reliées par des liaisons filaires (non référencées) aux extrémités du bobinage inducteur 43. Des balais (non référencés) frottent sur les bagues collectrices 46, 47. Ces balais appartiennent à un porte-balais 48 relié au régulateur de tension (non visible à la figure 2).

Le porte-balais 48 et le régulateur de tension sont ici logés dans le capot 15 et fixés au fond du palier.

Ces constituants 48, 15 forment un ensemble comme visible par exemple dans le document WO 02/29958.

En variante le bobinage inducteur 43 du rotor peut être fixe et être relié au régulateur de tension.

Dans un véhicule automobile, l'alternateur polyphasé permet de transformer un mouvement de rotation du rotor inducteur 1, entraîné par le moteur thermique du véhicule, en un courant électrique induit dans le bobinage 7 du stator 3. L'alternateur peut aussi être réversible. Il constitue alors un moteur électrique qui peut entraîner en rotation, via l'arbre de rotor 2, le moteur thermique, appelé également moteur à explosions, du véhicule. Cet alternateur réversible est appelé alterno-démarreur. L'alternateur permet de transformer de l'énergie mécanique en énergie électrique. Il en est de même de l'alterno-démarreur lorsque celui-ci fonctionne en mode générateur de courant. Lorsque l'alterno-démarreur fonctionne en mode moteur électrique, notamment pour démarrer le moteur thermique du véhicule, il transforme de l'énergie électrique en énergie mécanique.

Dans un alternateur ou dans un alterno-démarreur fonctionnant en mode générateur de courant, le stator est un stator induit et le rotor un rotor inducteur. Dans un alterno-démarreur fonctionnant en mode moteur électrique, le stator est un stator inducteur et le rotor un rotor induit.

Dans un alterno-démarreur le dispositif de redressement comporte le plus souvent un pont de transistors, par exemple du type MOSFET, et il est prévu un dispositif de commande pour notamment injecter du courant dans les phases du stator lorsque l'alterno-démarreur fonctionne en mode moteur électrique notamment pour démarrer le moteur thermique du véhicule.

Dans tous les cas le stator comporte un corps 30 portant un bobinage 7 composé de plusieurs phases, comportant chacune au moins un enroulement, dont les sorties sont reliées électriquement à un dispositif de redressement 6 pour redresser le courant alternatif produit dans les phases du stator, lorsque le stator est un induit, en un courant continu pour recharger la batterie et/ou alimenter les consommateurs du réseau de bord du véhicule. Ce dispositif de redressement comporte par exemple un pont de diodes.

En ce qui concerne le corps 30 du stator 3 celui-ci est réalisé, par exemple comme visible à la figure 2, sous la forme d'un paquet de tôles pour diminuer les courants de Foucault.

Ces tôles comportent une pluralité d'encoches. Ces encoches sont alignées pour former une pluralité de rainures axiales ou hélicoïdale.

Les encoches sont du type fermé ou semi-fermé et présentent dans ce cas chacune une ouverture qui débouche à la périphérie interne du corps du stator. Ces encoches sont délimitées de manière alternée par des dents, deux encoches consécutives étant séparées par une dent.

Les enroulements du bobinage du stator sont montés dans les encoches dont le nombre varie selon les applications et le nombre de phases. Par exemple l'alternateur ou l'alterno-démarreur, étant du type triphasé et le rotor étant un rotor à griffes comportant deux roues polaires présentant chacune six dents, le stator comporte dans ce cas 36 encoches. En variante on double le nombre d'encoches pour réduction des bruits.

Dans une forme de réalisation les enroulements sont des enroulements à fil continu réalisés par exemple de manière ondulée ou imbriquée dans les encoches autour de plusieurs dents. En variante, pour augmenter la puissance de la machine et augmenter le taux de remplissage des encoches, les enroulements sont des enroulements à barres comportant des épingles reliées les unes aux autres par soudure.

Les enroulements traversent le corps 30 du stator et s'étendent en saillie de part et d'autre du corps du stator, ces parties saillantes 71, 72 étant appelées chignons, le chignon 71 étant le chignon arrière logé dans le palier 4, tandis que le chignon 72 est le chignon avant logé dans le palier 24.

L'un au moins des paliers 4, 24 présente des ouvertures de passage d'air pour circulation du fluide de refroidissement à l'intérieur de l'alternateur.

Cette circulation est, pour diminuer les niveaux des bruits à haut régimes de rotation du rotor et donc du moteur à explosions ou moteur thermique du véhicule automobile, réalisée à l'aide d'un système de ventilation comprenant selon une caractéristique de l'invention un ventilateur indépendant 10 disposé de façon à être déterminant pour le refroidissement à des vitesses de rotation relativement faibles du rotor.

Ce ventilateur indépendant 10 est associé à un ventilateur 8, 80 solidaire du rotor de manière décrite ci-après.

A la figure 2 des ouvertures de passage d'air de forme oblongue 55, 54 sont réalisées respectivement dans.le fond et dans le rebord du palier arrière 4.

La forme de ces ouvertures est mieux visible à la figure 12. En particulier les ouvertures 55 sont délimitées intérieurement par une âme tubulaire 56 servant au logement du roulement arrière 5. Le bord inférieur de ces ouvertures est donc en forme d'arc de cercle. Latéralement ces ouvertures sont délimitées par des bras 57 globalement d'orientation radiale.

Le bord supérieur de ces ouvertures 55 est globalement en forme d'arc de cercle. En variante le bord supérieur a une forme non circulaire.

Les ouvertures 55 ont une plus grande taille que les ouvertures 54 plus nombreuses.

Ces ouvertures 54 affectent le rebord périphérique globalement d'orientation axiale du palier 4 ainsi qu'une portion de la périphérie externe du fond globalement d'orientation transversale du palier 4 pour pouvoir être démoulées de manière aisée. Ces ouvertures borgnes 54 sont délimitées chacune par deux ailettes 156 inclinées.

Les ailettes 156 sont inclinées transversalement au niveau du fond du palier 4 et axialement au niveau du rebord du palier 4. Ces ouvertures 54 sont allongées axialement. Cette configuration permet une bonne circulation de l'air et ce avec réduction des bruits.

On voit en 58 des ouvertures pour la fixation du corps des diodes négatives et en 59 les bossages taraudés associés aux goujons 65 de la figure 2.

Des ouvertures de forme oblongue 155, 154 sont également réalisées respectivement dans le fond et dans le rebord du palier avant 24. Ces ouvertures ont une forme analogue à celle des ouvertures 55, 54.

Les ouvertures 54, 154 sont des ouvertures d'entrées ou d'admission d'air, tandis que les ouvertures 55, 155 sont des ouvertures de sortie d'air pour la circulation de l'air à l'intérieur de la machine sous l'action ici de deux ventilateurs respectivement arrière et avant 8, 80 solidaires du rotor 1 et donc entraînés en rotation par celui-ci.

Le ventilateur avant 80 est fixé sur l'extrémité axiale avant du rotor 1 et est monté de manière adjacente au fond du palier avant 24 radialement en dessous du chignon avant 72 du bobinage 7.

Le ventilateur arrière 8 est fixé sur l'extrémité axiale arrière du rotor 1 et est monté de manière adjacente au fond du palier arrière 4 radialement en dessous du chignon arrière 71 du bobinage 7.

Un espace plus étroit existe entre l'extrémité axiale avant du rotor et le fond du palier 24, qu'entre l'extrémité axiale arrière du rotor et le fond du palier 4.

Chaque ventilateur comporte une pluralité de pales.

Les pales du ventilateur avant 80 sont issues par découpe et pliage d'un flasque métallique fixé sur la face avant du rotor 1 par exemple par soudage par points ou par sertissage.

Dans un mode de réalisation il en est de même du ventilateur arrière

Selon le mode de réalisation de la figure 2 les pales du ventilateur arrière 8 comportent deux séries de pales, chaque pale d'une série étant ici issue par découpe et pliage d'un flasque métallique.

Ce ventilateur 8 comporte en réalité deux ventilateurs superposés, un premier des flasques étant fixé, par exemple par soudage par points, sur l'extrémité axiale arrière du rotor et le second flasque sur le premier flasque par exemple par soudage par points.

Un tel ventilateur 8 est décrit par exemple dans le document FR A 2 741 912 auquel on se reportera.

Les ventilateurs 8, 80 sont type centrifuge et à la figure 2 on a représenté par des flèches la circulation de l'air à l'intérieur de l'alternateur lorsque l'arbre 2 et le rotor 1 tournent sachant qu'un rapport de démultiplication existe entre la vitesse de rotation du moteur thermique du véhicule du fait de la présence du dispositif de transmission de mouvement précité intervenant entre l'arbre 2 et le moteur thermique.

Ce rapport de transmission est de l'ordre de 2 à 3,5 en sorte que l'arbre 2 peut tourner à grande vitesse.
Le système de ventilation selon l'invention, qui équipe cet alternateur, comporte dans ce mode de réalisation outre le ventilateur 8, avantageusement du type centrifuge, un ventilateur indépendant 10, dans cette figure à action axiale c'est-à-dire à ventilation axiale, qui, dans l'exemple représenté, est disposé dans le prolongement de l'arbre 2, à proximité de celui-ci. Le ventilateur 10 peut être disposé à l'extérieur ou à l'intérieur de la machine (l'alternateur).
A la figure 2 le ventilateur indépendant 10, représenté de manière schématique, est disposé à l'intérieur d'un manchon 200 solidaire du fond du capot 15 ouvert centralement et prolongeant celui-ci vers l'extérieur. Ce manchon présente des bras (non représenté) pour montage à rotation du ventilateur 10. Un tel montage sera décrit plus en détails dans les figures 3 et 4. En variante le ventilateur 10 est placé à l'extérieur de la machine, par exemple il est monté dans un boîtier implanté dans une zone froide et qui est relié au manchon 200 par une conduite. Le manchon 200 est remplacé dans un mode de réalisation par un boîtier décrit ci-après.
Les deux ventilateurs 8, 10 sont disposés d'un même côté du rotor 1, ici à l'arrière de celui-ci.
Suivant une caractéristique le ventilateur 8 est de taille réduite par rapport à un ventilateur solidaire du rotor devant produire un débit sensiblement égal au débit cumulé des ventilateurs 8, 10.
A la figure 2 le ventilateur 8 est transversalement de faible hauteur par rapport à un ventilateur conventionnel, sa hauteur transversale étant ici inférieure à celle du ventilateur avant 80.
Axialement le ventilateur 8 est de hauteur axiale supérieure à celle du ventilateur 80.
Il en résulte que le diamètre externe du ventilateur 8 est inférieur au diamètre externe du ventilateur avant 80. Ce ventilateur 80 est ici configuré pour réduire les bruits. Plus précisément le rapport entre le diamètre externe du ventilateur 80 et le diamètre externe du rotor 1 est compris entre 97% et 90%.
A la figure 2 le diamètre externe du ventilateur 8 est supérieur au diamètre externe du noyau 44 du rotor 1.
Le rapport entre le diamètre externe du ventilateur 8 et le diamètre externe du rotor 1 est ici inférieur à 90%. Le diamètre externe du ventilateur 8 est supérieur au diamètre externe D1 de l'ouverture 54, c'est-à-dire au diamètre externe du bord supérieur des ouvertures 54.
En variante le bord supérieur des ouvertures n'est pas forcément de forme circulaire. Dans tous les cas la périphérie externe du ventilateur s'étend à l'extérieur de la périphérie externe des ouvertures 54.

Selon l'invention, de bons résultats ont été obtenus pour des rapports (diamètre externe du ventilateur/diamètre externe du rotor) compris entre 84% et 68%. Par exemple pour un diamètre externe de rotor de 111 mm, le diamètre externe du ventilateur 8 est de 90 mm.

En variante le diamètre externe du ventilateur est égal au diamètre D2 (figure 2) de la zone d'enracinement ou base des dents du rotor au flasque de la roue polaire associée.

Plus précisément à la figure 2 le rotor de manière précitée est un rotor annulaire à griffes présentant deus séries des dents globalement d'orientation axiales, chaque série de dents étant reliée à sa base à la périphérie externe de diamètre D2 déterminé d'un flasque globalement d'orientation transversale. Le diamètre externe du ventilateur de taille réduite 8 est alors égal au diamètre externe D2 du flasque du rotor.

Le rapport précité est alors globalement de 76%. Bien entendu ce ventilateur 8 présente comme visible à la figure 2 un diamètre interne de pale supérieur au diamètre interne des ouvertures 54. Il ne recouvre pas totalement les ouvertures 54.

Les figures 3 et 4 illustrent, à titre d'exemple, un mode de réalisation et de montage du ventilateur indépendant 10. Le ventilateur est entraîné par un moteur 12 disposé au centre d'un support 13 sous la forme d'un boîtier de support ouvert centralement à cet effet. L'ouverture centrale du support 13 est ici de forme circulaire adaptée au diamètre externe des pales du ventilateur 10 pour loger celui-ci comme visible à la figure 4. Ce support 13 est fixé par des vis 14, ici au nombre de quatre, sur le capot 15 ouvert centralement de la machine électrique tournante. Les vis 14 sont fixées aux quatre coins du support en forme de barre creuse de section rectangulaire, ici carrée. Une grille de protection 16 est disposée sur le boîtier devant le ventilateur 10 Cette grille est fixée par les vis 14 sur le boîtier 13. Du côté du capot 15, le boîtier 13 est ouvert, mais comporte quatre éléments 17 de support du moteur 12, en forme de rayons. Bien entendu le nombre d'éléments 17 dépend des applications. La grille 16 est dans un mode de réalisation à maillage régulier, les mailles de la grille étant par exemple en forme de losange, le fil de la grille étant avantageusement de section non circulaire. Cette disposition permet de réduire les bruits.

Ainsi, l'invention propose un système de ventilation qui comporte une ventilation indépendante avantageusement axiale couplée avec une ventilation solidaire du rotor, avantageusement centrifuge. Le ventilateur indépendant peut avoir une vitesse constante ou "par marche", ou piloté par le régulateur de la machine.

Plus précisément le ventilateur indépendant dans un mode de réalisation fonctionne à vitesse de rotation constante.

En variante la vitesse de rotation du ventilateur est pilotée par exemple à l'aide d'un régulateur de tension, qui dans un mode de réalisation est lui-même piloté.

Dans un mode de réalisation la vitesse de rotation du ventilateur indépendant est réalisée par marches, c'est-à-dire par paliers. La vitesse de rotation est par exemple maximum à bas régime du moteur à combustion du véhicule automobile et diminue ensuite dans un deuxième palier à partir d'un régime déterminé ou prédéterminé de rotation dudit moteur.

On peut prévoir également plus de deux marches.

En variante la vitesse de rotation de ce ventilateur indépendant est décroissante de manière continue.

Tout cela dépend des applications.

Ce ventilateur indépendant est dans un mode de réalisation débrayable pour un régime ou vitesse de rotation du rotor déterminé ou prédéterminé.

Une fois débrayé on peut le remettre en route pour des situations particulières, notamment lorsqu'un capteur de températures détecte une température anormale de la machine.

La vitesse de rotation du ventilateur indépendant peut donc être pilotée en fonction du fonctionnement de la machine électrique tournante, par exemple de manière précitée par le régulateur de tension de cette machine ou par la température de la machine, un capteur de température étant prévu à cet effet.

Le ventilateur indépendant est dans un mode de réalisation actionné par un moteur électrique.

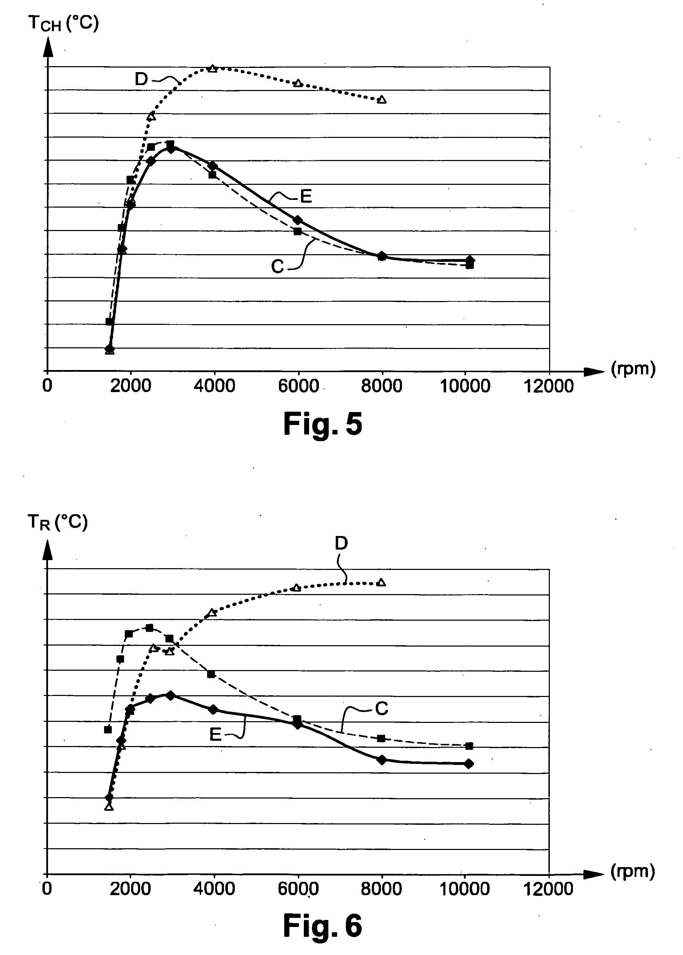

Par rapport à un ventilateur solidaire du rotor, tel que le ventilateur 8 de la figure 2, caractérisé par un débit qui augmente sensiblement linéairement avec la vitesse de rotation, le ventilateur indépendant produit un débit d'air de refroidissement qui pourrait être constant sur toute l'étendue de la vitesse du rotor. Par conséquent, le ventilateur indépendant assure un refroidissement efficace à des faibles vitesses du rotor tandis que, à des vitesses élevées, c'est le ventilateur solidaire du rotor qui détermine le refroidissement comme il ressort des figures 5 à 10 qui seront décrites plus loin.

Mais, du fait que les débits du ventilateur solidaire du rotor et du ventilateur indépendant se superposent, le système de ventilation selon l'invention permet de réduire la taille du ventilateur 8 solidaire du rotor par rapport à un ventilateur de rotor classique unique, à des débits totaux identiques. Cette réduction concerne surtout le diamètre, mais également la hauteur, du ventilateur, c'est-à-dire la longueur axiale de ses pales. Le ventilateur 8 est donc d'encombrement réduit.

Or, le ventilateur de taille plus faible présente l'avantage de réduire considérablement les pertes et le bruit. A titre d'exemple, à des débits identiques, l'ajout du ventilateur indépendant 10 permet d'utiliser à la place d'un ventilateur de rotor classique de par exemple d'un débit de 13 litres par seconde (L/s) à 3000 rotations par minute (rpm), un petit ventilateur de seulement 7 litres par seconde à cette même vitesse de rotation, ce qui permet de réduire les pertes mécaniques à une vitesse de rotation de 18000 rpm de 770 W pour le grand ventilateur à seulement 295 W. Le ventilateur indépendant a un débit par exemple de 18 litres par seconde.

D'autre part, comme cela ressort des figures 5 à 10 qui sont décrites ci-après, en couplant en fonctionnement un ventilateur indépendant du rotor, comme le rotor 10 selon la figure 2, avec un ventilateur de type classique, solidaire en rotation du rotor, mais de plus petite taille, on peut obtenir un très bon refroidissement à toutes les vitesses, à faible vitesse, le refroidissement étant déterminé par le ventilateur indépendant 10 et à grande vitesse par le ventilateur 8 solidaire du rotor. En effet, le ventilateur classique a une évolution linéaire du débit, avec la vitesse du rotor, qui passe par zéro, et le ventilateur indépendant a un débit le cas échéant constant sans variation avec la vitesse du rotor. Le couple formé par les deux ventilateurs 8 et 10 a une évolution linéaire du débit en fonction de la vitesse de rotation du rotor. Cependant, ce débit ne part pas de zéro, mais du niveau du débit du ventilateur indépendant et suit une ligne sensiblement droite. Bien entendu, il est possible de donner au débit produit par le couple des ventilateurs 8 et 10 une autre évolution en faisant varier la vitesse du ventilateur "en marches" c'est-à-dire par palier ou en faisant piloter le ventilateur par le régulateur.

Les figures 5 à 10 témoignent de l'efficacité de la ventilation réalisée par le système de ventilation selon l'invention, comprenant un ventilateur 8 de taille réduite entraîné par de rotor 1 et un ventilateur indépendant 10 en représentant, en fonction de la vitesse de rotation du rotor en rpm (rotations ou nombre de tours par minute), l'évolution de certains paramètres significatifs de la machine, sous forme de trois courbes C, D et E, la courbe C indiquant l'évolution du paramètre considéré pour une machine dont le système de ventilation ne comporte qu'un ventilateur de rotor classique de grande taille (courbe C), une machine qui n'est équipée que d'un ventilateur indépendant 10 (courbe D) et d'une machine équipée d'un système de ventilation combinée (courbe E).

On rappellera, compte tenu du rapport de transmission précité intervenant entre le moteur thermique et l'arbre 2, que la vitesse de rotation ou nombre de tours par minute (rpm) de l'arbre 2 peut atteindre 18000 tours par minute avec un rapport de transmission de 3 et 12000 tours avec un rapport de transmission de 2.

De manière connue, selon les applications dans un alternateur conventionnel, la température au niveau du chignon 71, peut atteindre des valeurs supérieures à 200°, tandis que la température au niveau du roulement arrière 5 peut atteindre des valeurs supérieures à 150°.

La température moyenne des diodes du pont 6 peut atteindre des valeurs de l'ordre de 200°.

Dans les figures 5 à 10 on n'a pas représenté par simplicité les portions terminales des courbes pour les grandes valeurs de rpm, les valeurs maximales étant représentées pour un rpm de 10000 tours par minute.

La figure 5 illustre les valeurs de la température T_{CH} mesurée au niveau des chignons arrière 71 du bobinage 7 du stator pour les trois cas susmentionnés, la figure 6 les valeurs de température T_{R} du roulement 5 du palier arrière, et les figures 7 et 8 respectivement les valeurs de températures moyennes relevées à la jonction des diodes positives T_{JD+} et de la température moyenne des diodes négatives _{TJD-}. On constate sur les quatre figures, que dans la zone de vitesse de rotation relativement faible, à savoir jusqu'à 2000 rpm, la température est déterminée par le ventilateur indépendant 10 puisque les deux courbes D et E sont pratiquement confondues, tandis que les valeurs de la courbe C reflétant l'effet de refroidissement accomplit par le ventilateur de rotor classique 8 sont plus élevés, ce qui signifie que à ces vitesses de rotation, le ventilateur classique de plus grand diamètre est moins efficace. Par contre, à des vitesses de rotation élevées le refroidissement obtenu avec le ventilateur indépendant 10 tout seul est largement inférieur au refroidissement produit par le système selon l'invention combinant le ventilateur 8 de diamètre réduit et le ventilateur indépendant 10. Dans ce domaine des vitesses, les courbes C et E présentent approximativement la même allure et sont relativement rapprochées, ce qui est le signe que l'utilisation d'un petit ventilateur 8 n'est pas au détriment du refroidissement dans le domaine des vitesses de rotation élevées.

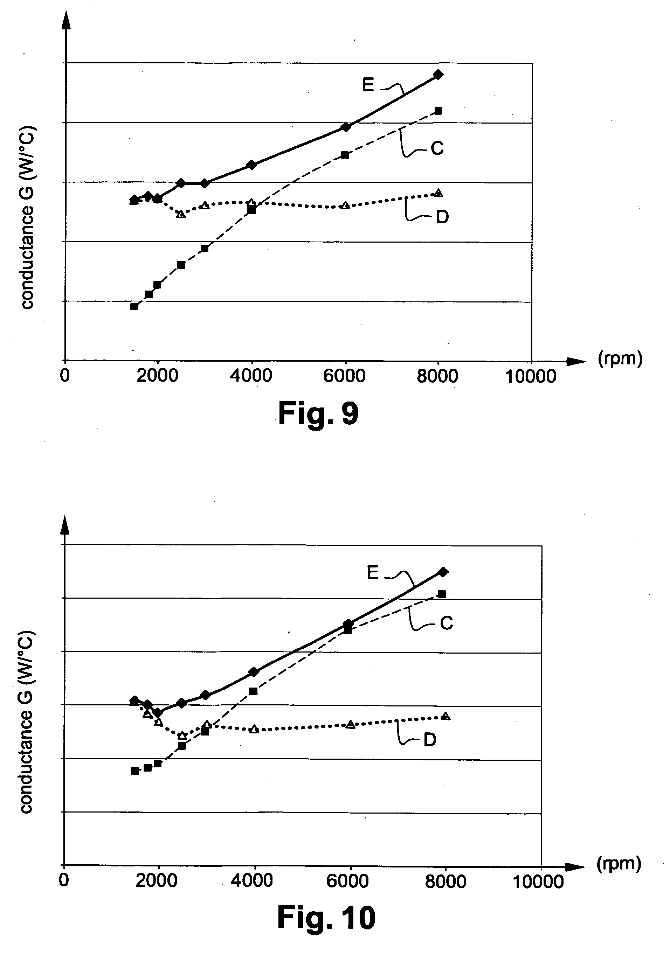

Concernant les figures 9 et 10 qui indiquent la conductance thermique (en Watt par °Celsius) entre l'air et les diodes positives et négatives du dispositif 6, en fonction de la vitesse de rotation du rotor (rpm), il est confirmé que, dans le domaine des vitesses de rotation relativement faibles, c'est le ventilateur indépendant 10 qui est déterminant tandis que, à des vitesses élevées, l'évolution de la conductance est déterminée par le ventilateur de rotor, l'effet du ventilateur indépendant se superposant de façon avantageuse.

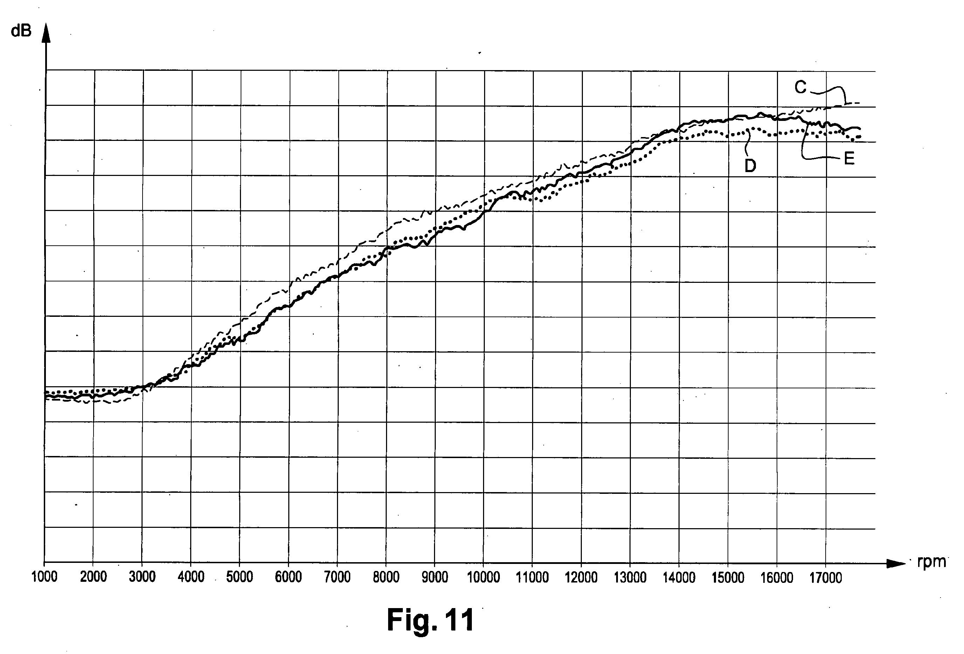

La figure 11 représentant le niveau de bruit (dB) en décibels en fonction de la vitesse de rotation du rotor 1 (rpm) pour les trois cas susmentionnés, indique que le bruit produit par le système de ventilation selon l'invention, indiqué par la courbe E, est inférieur au bruit produit par un grand ventilateur classique, représenté par la courbe C

Concernant le fonctionnement du système de ventilation, celui-ci ressort clairement de la figure 2. Le ventilateur indépendant 10 produit un flux d'air de refroidissement F1 qui produit un écoulement d'air de refroidissement axial indiqué par les flèche F1 qui passe par les ouvertures 55, 54 prévues dans le palier arrière, vient en contact avec le pont des diodes 6 et du roulement 5 du palier arrière 4, pour parvenir au ventilateur 8 solidaire du rotor, qui est du type centrifuge et génère l'écoulement qui traverse le chignon arrière 71 de l'enroulement 7 de stator.

Cette disposition se marie bien avec un rotor 1 à griffes présentant comme visible à la figure 13, au moins une paire d'aimants permanents 138 de part et d'autre d'une dents 90 d'une dune des roues polaires.

Dans cette figure chaque roue polaire présente huit dents et quatre paires d'aimants 138.

Les aimants permettent d'augmenter la puissance de la machine. Leur nombre dépend des applications.

Ainsi tous les espaces entre les dents sont dans un mode de réalisation occupés par les aimants permanents 138.

En variante il n'est pas prévu d'aimant.

Dans un mode de réalisation on peut supprimer le ventilateur arrière 8 et remplacer le ventilateur avant 80 par un ventilateur avant du type hélico-centrifuge ou du type axial. On peut utiliser comme ventilateur hélico-centrifuge celui décrit dans le document US A 4 418 295, l'angle d'inclinaison des pales par rapport au plan du flasque étant compris entre 30 et 80°. Ainsi la ventilation comprend une composante radiale traversant le chignon 72 et une composante axiale traversant le rotor et le chignon arrière 71.

C'est ce ventilateur hélico-centrifuge ou axial qui est alors couplé avec le ventilateur indépendant 10.

Les deux ventilateurs 80, 10 sont dans ce cas disposés de part et d'autre du rotor 1 et dans un mode de réalisation le système de ventilation est dépourvu de ventilateur solidaire du rotor du côté arrière du rotor ou est implanté le ventilateur indépendant 10.

Bien entendu la présente invention n'est pas limitée aux exemples de réalisation décrits.

Ainsi dans un mode de réalisation le carter comporte plus de deux parties. Par exemple le carter comporte une partie intermédiaire intercalée axialement entre les paliers 4, 24. Cette partie intermédiaire porte intérieurement dans un mode de réalisation le corps du stator. Cette partie intermédiaire peut être refroidie par circulation d'un liquide de refroidissement et comporte pour ce faire un canal de circulation de ce fluide, qui dans un mode de réalisation est le liquide de refroidissement du moteur thermique du véhicule.

De même le palier avant est dans un mode de réalisation refroidie par circulation d'un fluide de refroidissement et comporte à cet effet un canal pour la circulation de ce fluide.

Dans ce cas on peut supprimer le ventilateur avant 80 et conserver le ventilateur arrière 8. En variante le ventilateur avant 80 est un ventilateur à action axiale. Un tel ventilateur avant 80 peut être utilisé dans le mode de réalisation de la figure 2, les ouvertures 154 n'étant alors plus nécessaires. Toutes les combinaisons sont possibles.

Avec l'utilisation d'un ventilateur à action axiale on peut dans un mode de réalisation supprimer le ventilateur arrière 8.

Le ventilateur arrière 8 est en variante un ventilateur simple. Le ventilateur avant 80 est en variante un ventilateur double à deux séries de pales et comporte donc deux ventilateurs superposés.

Le ou les ventilateurs 80, 8 en variante ne comportent pas de flasque. Par exemple dans un mode de réalisation les pales des ventilateurs appartiennent chacune à un caloduc monté dans le rotor comme décrit dans le document WO 2004/107535. Lorsque le ventilateur est à deux séries de pales, au moins une pale de l'une des séries appartient à un caloduc. D'une manière générale en variante au moins une pale d'un ventilateur appartient à un calodùc.

Bien entendu, pour augmenter la puissance de l'un au moins des ventilateurs 80, 8, celui-ci est doté d'un anneau fixé sur les bords libres de ses pales comme visible à la figure 14.

Dans cette figure 14 c'est le ventilateur arrière 8, ici à une rangée de pales 181, qui est doté d'une tel anneau 180 fixée sur le bord libre des pales 181 issues par découpe et pliage du flasque 182 destiné à être fixé sur l'extrémité axiale arrière du rotor, par exemple par soudage par points ou sertissage.

Grâce à cette disposition on augmente la puissance du ventilateur ce qui permet de réduire encore la hauteur transversale du ventilateur 8, dont le diamètre externe peut être environ de 68% de celui du diamètre externe du rotor.

En variante au moins l'un au moins des ventilateurs est obtenu par moulage. Ce ventilateur est par exemple en matière plastique.

L'alternateur ou l'alterno-démarreur peut être équipé d'au moins un caloduc au niveau de son arbre et/ou de son stator et/ou de son dispositif de redressement comme décrit dans le document WO 2004/107535 précité.

Bien entendu on peut inverser les structures. Ainsi les diodes positives du dispositif de redressement 6, de la figure 2 peuvent être implantées en sorte que leurs queues pénètrent dans les ouvertures 55 comme décrit dans le document EP A 0 743 738. Dans ce cas les paires de diodes sont montées tête-bêche et le connecteur est implanté entre le dissipateur positif et le fond du palier arrière 4.

Les ouvertures 54, 154 sont en variante des ouvertures d'entrée d'air et les ouvertures 55, 155 des ouvertures de sortie d'air, les ventilateurs 80, 8 étant alors du type centripète ainsi que le ventilateur indépendant 10, qui alors aspire de l'air au lieu de le refouler comme à la figure 2.

Bien entendu en variante le capot est monobloc avec le palier arrière 4 comme visible par exemple dans le document US A 4 488 070.

Dans ce cas on fixe le montage de la figure 3 sur le fond du palier arrière. A la lumière de la figure 2 de ce document on voit que le ventilateur arrière 8 peut être solidaire du collecteur portant les bagues 46, 47 de la figure 2. Dans tous les cas le ventilateur arrière est entraîné en rotation par le rotor en étant solidaire de celui-ci soit directement, soit indirectement via l'arbre 2.

On appréciera que dans tous les cas le roulement arrière 5, le dispositif de redressement 6, le régulateur de tension et le porte-balais sont bien refroidis.

En variante la machine électrique est un moteur électrique.

En variante le dispositif de redressement et le régulateur de tension sont implantés dans un boîtier implanté à l'extérieur du palier arrière et relié aux sorties 70 et au porte-balais 48 par des câbles.

Bien entendu le ventilateur de plus petite taille et le ventilateur indépendant sont dans un mode de réalisation disposés du côté de la face avant du rotor de la machine. Ainsi dans un mode de réalisation le ventilateur de plus petite taille est monté dans le palier avant 24, tandis que le ventilateur indépendant est implanté axialement entre le palier avant 24 et la poulie 21 ou d'une manière générale entre le palier avant et l'organe d'entraînement.

Dans un mode de réalisation l'arbre du rotor de la machine traverse le ventilateur indépendant monté à rotation via un roulement, tel qu'un roulement à billes, sur une douille solidaire du palier avant et traversée par l'arbre de l'alternateur.

L'entraînement du ventilateur est réalisé par exemple par un moteur électrique via un mécanisme de transmission à renvoie d'angle. Le dispositif de transmission comporte par exemple au moins deux engrenages perpendiculaires, l'un étant solidaire du ventilateur et l'autre solidaire en rotation du moteur électrique perpendiculaire à l'arbre du rotor.

En variante l'arbre du rotor de la machine porte le rotor du moteur électrique du ventilateur indépendant.

Dans tous les cas le ventilateur indépendant est monté dans un boîtier solidaire du palier avant.

On appréciera dans tous les cas que le ventilateur de plus petite taille est moins sensible à l'action de la force centrifuge et est donc plus fiable et plus résistant.

Ce ventilateur peut être donc dépourvu de nervures de rigidification. Il peut être en matière plastique.

D'une manière générale il est simplifié et d'un coût moindre.

Cela est du à la solution selon l'invention, qui permet de diminuer le diamètre externe de ce ventilateur.

## Revendications

1. Système de ventilation pour machine électrique tournante, notamment pour véhicule automobile, du type comprenant un rotor (1) monté rotatif dans un stator (3) porté par un carter (4, 24) et un dispositif de refroidissement par écoulement forcé d'un fluide de refroidissement, tel que de l'air, muni d'au moins un ventilateur (8, 80) solidaire du rotor (1) et d'un ventilateur indépendant (10), caractérisé en ce le rapport entre le diamètre externe du ventilateur solidaire du rotor (1) et le diamètre externe du rotor (1) est compris entre 84 et 68% en sorte que le ventilateur (1) solidaire du rotor (1) est de taille réduite et en ce que le ventilateur indépendant (10) est configuré pour être actif à des faibles vitesses du rotor (1) de façon à être déterminant pour le refroidissement à des vitesses de rotation relativement faibles du rotor.

2. Système de ventilation selon la revendication 1, **caractérisé en ce que** le ventilateur (80) solidaire du rotor (1) et le ventilateur indépendant (10) sont disposés de part et d'autre du rotor (1).

3. Système de ventilation selon la revendication 2, **caractérisé en ce que** le ventilateur (80) solidaire du rotor (1) est du type hélico-centrifuge ou axial.

4. Système de ventilation selon la revendication 2 ou 3, **caractérisé en ce qu'**il est dépourvu de ventilateur solidaire du rotor (1) du côté du rotor (1) où est implanté le ventilateur indépendant (10).

5. Système de ventilation selon la revendication 1, caractérisé le ventilateur (80) solidaire du rotor (1) et le ventilateur indépendant (10 sont disposés d'un même côté du rotor (1).

6. Système de ventilation selon la revendication 5, **caractérisé en ce que** le ventilateur (8) solidaire du rotor (1) est doté de pales et présente une taille réduite en diamètre et en longueur axiale de ses pales par rapport à un ventilateur solidaire du rotor devant produire un débit sensiblement égal au débit cumulé du ventilateur indépendant (10) et du ventilateur de rotor (8) de taille réduite.

7. Système de ventilation selon la revendication 6, **caractérisé en ce que** la réduction de la taille du ventilateur (8) solidaire du rotor constitue un moyen de réduction des pertes mécaniques et du niveau de bruit produit par le système de ventilation.

8. Système de ventilation selon l'une quelconque des revendications 5 à 7, **caractérisé en ce qu'**il est dépourvu de ventilateur solidaire du rotor (1) du côté du rotor (1) opposé au ventilateur indépendant (10) et au ventilateur de taille réduite (8) solidaire du rotor (1).

9. Système de ventilation selon l'une quelconque des revendications 5 à 7, **caractérisé en ce qu'**il comporte du côté du rotor (1) opposé au ventilateur indépendant (10) et au ventilateur de taille réduite (8) solidaire du rotor (1), un ventilateur supplémentaire (80) solidaire du rotor et de diamètre externe supérieur au diamètre externe du ventilateur de taille réduite (8) solidaire du rotor (1).

10. Système selon l'une quelconque des revendications 5 à 9, **caractérisé en ce que** le rotor est un rotor annulaire à griffes présentant deus séries des dents (90) globalement d'orientation axiales, chaque série de dents étant reliée à sa base à la périphérie externe de diamètre déterminé d'un flasque globalement d'orientation transversale et **en ce que** le diamètre externe du ventilateur de taille réduite (8) est égal au diamètre externe (D2) du flasque du rotor.

11. Système de ventilation selon l'une quelconque des revendications 5 à 10, caractérisé en ce le ventilateur de taille réduite (8) solidaire du rotor (1) est du type centrifuge.

12. Système de ventilation selon l'une quelconque des revendications 5 à 10, caractérisé en ce le ventilateur de taille réduite (8) solidaire du rotor (1) est du type centripète.

13. Système de ventilation selon l'une quelconque des revendications précédentes, **caractérisé en ce que** le ventilateur indépendant (10) est configuré pour fonctionner à une vitesse de rotation constante.

14. Système de ventilation selon l'une quelconque des revendications 1 à 12, **caractérisé en ce que** le ventilateur indépendant (10) est un ventilateur dont la vitesse de rotation est variable par marche.

15. Système de ventilation selon l'une des revendications 1 à 12, **caractérisé en ce que** la vitesse de rotation du ventilateur indépendant (10) est pilotée en fonction du fonctionnement de la machine électrique tournante, avantageusement par le régulateur de tension de cette machine.

16. Système de ventilation selon l'une des revendications précédentes, **caractérisé en ce que** le ventilateur indépendant (10) est entraîné en rotation par un moteur indépendant (12) tel qu'un moteur électrique.

17. Système de ventilation suivant l'une quelconque des revendications précédentes, **caractérisé en ce que** le ventilateur indépendant (10) est monté dans un support (13) susceptible d'être fixé sur un capot (15) de la machine électrique tournante doté de passages d'air (54, 55- 154, 155).

18. Système de ventilation suivant l'une quelconque des revendications précédentes, **caractérisé en ce que** le ventilateur indépendant (10) est un ventilateur à ventilation axiale.

19. Machine électrique tournante comprenant un rotor (1) monté rotatif dans un stator (3) porté par un carter (4, 24) comportant au moins deux parties (4, 24) à savoir un palier avant (24) et un palier arrière (4) doté de passages d'air et portant un porte-balais (48) logé dans un capot (15) solidaire du palier arrière (4), **caractérisé en ce qu'**il comporte un système de ventilation selon l'une quelconque des revendications 1 à 19.

20. Machine électrique selon la revendication 19, **caractérisée en ce que** le palier arrière (4) présente des ouvertures (54) d'entrée d'air et **en ce que** la périphérie externe du ventilateur de taille réduite (8) s'étend à l'extérieur de la périphérie externe des ouvertures (54) d'entrée d'air.

21. Machine électrique selon la revendication 19 ou 20, **caractérisé en ce que** le ventilateur indépendant (10) est monté dans un support (13) fixé sur le capot (15) solidaire du palier arrière.

## Claims

1. Ventilation system for a rotating electrical machine, notably for a motor vehicle, of the type comprising a rotor (1) mounted so as to rotate in a stator (3) supported by a housing (4, 24) and a device for cooling by forced flow of a cooling fluid, such as air, furnished with at least one fan (8, 80) secured to the rotor (1) and an independent fan (10), **characterized in that** the ratio between the external diameter of the fan secured to the rotor (1) and the external diameter of the rotor (1) is between 84 and 68% so that the fan (8, 80) secured to the rotor (1) is of reduced size and **in that** the independent fan (10) is configured to be active at low speeds of the rotor (1) so as to be determinant for cooling at relatively low rotation speeds of the rotor.

2. Ventilation system according to Claim 1, **characterized in that** the fan (80) secured to the rotor (1) and the independent fan (10) are placed on either side of the rotor (1).

3. Ventilation system according to Claim 2, **characterized in that** the fan (80) secured to the rotor (1) is of the helico-centrifugal or axial type.

4. Ventilation system according to Claim 2 or 3, **characterized in that** it has no fan secured to the rotor (1) on the side of the rotor (1) where the independent fan (10) is installed.

5. Ventilation system according to Claim 1, **characterized in that** the fan (80) secured to the rotor (1) and the independent fan (10) are placed on one and the same side of the rotor (1).

6. Ventilation system according to Claim 5, **characterized in that** the fan (8) secured to the rotor (1) is furnished with blades and has a reduced size in diameter and in axial length of its blades relative to a fan secured to the rotor that has to produce a flow rate that is substantially equal to the total flow rate of the independent fan (10) and the rotor fan (8) of reduced size.

7. Ventilation system according to Claim 6, **characterized in that** the reduction in size of the fan (8) secured to the rotor constitutes a means for reducing the mechanical losses and the noise level produced by the ventilation system.

8. Ventilation system according to any one of Claims 5 to 7, **characterized in that** it has no fan secured to the rotor (1) on the side of the rotor (1) opposite to the independent fan (10) and to the fan (8) of reduced size secured to the rotor (1).

9. Ventilation system according to any one of Claims 5 to 7, **characterized in that** it comprises, on the side of the rotor (1) opposite to the independent fan (10) and to the fan of reduced size (8) secured to the rotor (1), an additional fan (80) secured to the rotor and with an external diameter that is greater than the external diameter of the fan of reduced size (8) secured to the rotor (1).

10. System according to any one of Claims 5 to 9, **characterized in that** the rotor is an annular rotor with claws having two series of teeth (90) of generally axial orientation, each series of teeth being connected at its base to the external periphery of determined diameter of a flange of generally transverse orientation and **in that** the external diameter of the fan of reduced size (8) is equal to the external diameter (D2) of the rotor flange.

11. Ventilation system according to any one of Claims 5 to 10, **characterized in that** the fan of reduced size (8) secured to the rotor (1) is of the centrifugal type.

12. Ventilation system according to any one of Claims 5 to 10, **characterized in that** the fan of reduced size (8) secured to the rotor (1) is of the centripetal type.

13. Ventilation system according to any one of the preceding claims, **characterized in that** the independent fan (10) is configured to operate at a constant rotation speed.

14. Ventilation system according to any one of Claims 1 to 12, **characterized in that** the independent fan (10) is a fan of which the rotation speed is variable in steps.

15. Ventilation system according to one of Claims 1 to 12, **characterized in that** the rotation speed of the independent fan (10) is controlled as a function of the operation of the rotating electrical machine, advantageously by the voltage regulator of this machine.

16. Ventilation system according to one of the preceding claims, **characterized in that** the independent fan (10) is rotated by an independent motor (12) such as an electric motor.

17. Ventilation system according to any one of the preceding claims, **characterized in that** the independent fan (10) is mounted in a support (13) capable of being attached to a cover (15) of the rotating electrical machine furnished with air passageways (54, 55-154, 155).

18. Ventilation system according to any one of the preceding claims, **characterized in that** the independent fan (10) is an axial ventilation fan.

19. A rotating electrical machine comprising a rotor (1) mounted so as to rotate in a stator (3) supported by a housing (4, 24) comprising at least two portions (4, 24) namely a front bearing (24) and a rear bearing (4) furnished with air passageways and supporting a brush holder (48) housed in a cover (15) secured to the rear bearing (4), **characterized in that** it comprises a ventilation system according to any one of Claims 1 to 18.

20. Electrical machine according to Claim 19, **characterized in that** the rear bearing (4) has air-inlet apertures (54) and **in that** the external periphery of the fan of reduced size (8) extends to the outside of the external periphery of the air-inlet apertures (54).

21. Electrical machine according to Claim 19 or 20, **characterized in that** the independent fan (10) is mounted in a support (13) attached to the cover (15) secured to the rear bearing.

## Patentansprüche

1. Lüftungssystem für eine elektrische Drehmaschine, insbesondere für ein Kraftfahrzeug, von der Art, die einen Rotor (1), der drehend in einem von einem Gehäuse (4, 24) getragenen Stator (3) montiert ist, und eine Kühlvorrichtung durch erzwungene Strömung eines Kühlmittels wie Luft enthält, das mit mindestens einem fest mit dem Rotor (1) verbundenen Lüfter (8, 80) und mit einem unabhängigen Lüfter (10) versehen ist, **dadurch gekennzeichnet, dass** das Verhältnis zwischen dem Außendurchmesser des fest mit dem Rotor (1) verbundenen Lüfters und dem Außendurchmesser des Rotors (1) zwischen 84 und 68% liegt, so dass der fest mit dem Rotor (1) verbundene Lüfter (8, 80) eine verringerte Größe hat, und dass der unabhängige Lüfter (10) konfiguriert ist, um bei geringen Geschwindigkeiten des Rotors (1) aktiv zu sein, um für die Kühlung bei relativ schwachen Drehgeschwindigkeiten des Rotors maßgebend zu sein.

2. Lüftungssystem nach Anspruch 1, **dadurch gekennzeichnet, dass** der fest mit dem Rotor (1) verbundenen Lüfter (80) und der unabhängige Lüfter (10) zu beiden Seiten des Rotors (1) angeordnet sind.

3. Lüftungssystem nach Anspruch 2, **dadurch gekennzeichnet, dass** der fest mit dem Rotor (1) verbundenen Lüfter (80) von der Art halbaxial oder axial ist.

4. Lüftungssystem nach Anspruch 2 oder 3, **dadurch gekennzeichnet, dass** es keinen fest mit dem Rotor (1) verbundenen Lüfter auf der Seite des Rotors (1) aufweist, wo der unabhängige Lüfter (10) eingebaut ist.

5. Lüftungssystem nach Anspruch 1, **dadurch gekennzeichnet, dass** der fest mit dem Rotor (1) verbundenen Lüfter (80) und der unabhängige Lüfter (10) auf der gleichen Seite des Rotors (1) angeordnet sind.

6. Lüftungssystem nach Anspruch 5, **dadurch gekennzeichnet, dass** der fest mit dem Rotor (1) verbundene Lüfter (8) mit Flügeln versehen ist und eine im Durchmesser und in axialer Länge seiner Flügel verringerte Größe bezüglich eines fest mit dem Rotor verbundenen Lüfter aufweist, der einen Durchsatz im Wesentlichen gleich dem kumulierten Durchsatz des unabhängigen Lüfters (10) und des Rotor-Lüfters (8) verringerter Größe erzeugen muss.

7. Lüftungssystem nach Anspruch 6, **dadurch gekennzeichnet, dass** die Verringerung der Größe des fest mit dem Rotor verbundenen Lüfters (8) ein Mittel zur Verringerung der mechanischen Verluste und des vom Lüftungssystem erzeugten Geräuschpegels darstellt.

8. Lüftungssystem nach einem der Ansprüche 5 bis 7, **dadurch gekennzeichnet, dass** es keinen fest mit dem Rotor (1) verbundenen Lüfter auf der Seite des Rotors (1) gegenüber dem unabhängigen Lüfter (10) und dem fest mit dem Rotor (1) verbundenen Lüfter verringerter Größe (8) aufweist.

9. Lüftungssystem nach einem der Ansprüche 5 bis 7, **dadurch gekennzeichnet, dass** es auf der dem unabhängigen Lüfter (10) und dem fest mit dem Rotor (1) verbundenen Lüfter verringerter Größe (8) gegenüberliegenden Seite des Rotors (1) einen zusätzlichen fest mit dem Rotor verbundenen Lüfter (80) aufweist, dessen Außendurchmesser größer als der Außendurchmesser des fest mit dem Rotor (1) verbundenen Lüfters mit verringerter Größe (8) ist.

10. System nach einem der Ansprüche 5 bis 9, **dadurch gekennzeichnet, dass** der Rotor ein ringförmiger Klauenrotor ist, der zwei Reihen von Zähnen (90) mit global axialer Ausrichtung aufweist, wobei jede Reihe von Zähnen an ihrer Basis mit dem Außenumfang bestimmten Durchmessers eines global quer ausgerichteten Flanschs verbunden ist, und dass der Außendurchmesser des Lüfters verringerter Größe (8) gleich dem Außendurchmesser (D2) des Flanschs des Rotors ist.

11. Lüftungssystem nach einem der Ansprüche 5 bis 10, **dadurch gekennzeichnet, dass** der fest mit dem Rotor (1) verbundene Lüfter verringerter Größe (8) von der Art Zentrifugallüfter ist.

12. Lüftungssystem nach einem der Ansprüche 5 bis 10, **dadurch gekennzeichnet, dass** der fest mit dem Rotor (1) verbundene Lüfter verringerter Größe (8) von der Art Zentripetallüfter ist.

13. Lüftungssystem nach einem der vorhergehenden Ansprüche, **dadurch gekennzeichnet, dass** der unabhängige Lüfter (10) konfiguriert ist, um mit einer konstanten Drehgeschwindigkeit zu arbeiten.

14. Lüftungssystem nach einem der Ansprüche 1 bis 12, **dadurch gekennzeichnet, dass** der unabhängige Lüfter (10) ein Lüfter ist, dessen Drehgeschwindigkeit stufenweise variabel ist.

15. Lüftungssystem nach einem der Ansprüche 1 bis 12, **dadurch gekennzeichnet, dass** die Drehgeschwindigkeit des unabhängigen Lüfters (10) abhängig vom Betrieb der elektrischen Drehmaschine gesteuert wird, vorteilhafterweise vom Spannungsregler dieser Maschine.

16. Lüftungssystem nach einem der vorhergehenden Ansprüche, **dadurch gekennzeichnet, dass** der unabhängige Lüfter (10) von einem unabhängigen Motor (12) wie einem Elektromotor in Drehung versetzt wird.

17. Lüftungssystem nach einem der vorhergehenden Ansprüche, **dadurch gekennzeichnet, dass** der unabhängige Lüfter (10) in einen Träger (13) montiert ist, der an eine Haube (15) der elektrischen Drehmaschine montiert werden kann, die mit Luftdurchlässen (54, 55; 154, 155) versehen ist.

18. Lüftungssystem nach einem der vorhergehenden Ansprüche, **dadurch gekennzeichnet, dass** der unabhängige Lüfter (10) ein Lüfter mit Axiallüftung ist.

19. Elektrische Drehmaschine, die einen Rotor (1) enthält, der drehbar in einen Stator (3) montiert ist, welcher von einem Gehäuse (4, 24) getragen wird, das mindestens zwei Teile (4, 24) aufweist, nämlich ein vorderes Lager (24) und ein hinteres Lager (4), das mit Luftdurchlässen versehen ist und einen Bürstenhalter (48) trägt, der in einer fest mit dem hinteren Lager (4) verbundenen Haube (15) angeordnet ist, **dadurch gekennzeichnet, dass** sie ein Lüftungssystem nach einem der Ansprüche 1 bis 18 aufweist.

20. Elektrische Maschine nach Anspruch 19, **dadurch gekennzeichnet, dass** das hintere Lager (4) Lufteinlassöffnungen (54) aufweist, und dass der Außenumfang des Lüfters verringerter Größe (8) sich außerhalb des Außenumfangs der Lufteinlassöffnungen (54) erstreckt.

21. Elektrische Maschine nach Anspruch 19 oder 20, **dadurch gekennzeichnet, dass** der unabhängige Lüfter (10) in einen Träger (13) montiert ist, der an der fest mit dem hinteren Lager verbundenen Haube (15) befestigt ist.
